# EUROPEAN PATENT APPLICATION

(11) **EP 3 166 243 A1**
(43) Date of publication of application: **10.05.2017**
(21) Application number: 15192975.9
(22) Date of filing: 04.11.2015
(51) Int. Cl.: H04J 14/02

(54) **METHOD AND APPARATUS FOR PROVIDING PATH PROTECTION IN AN OPTICAL TRANSMISSION NETWORK**

(71) Applicant: Alcatel Lucent, 92100 Boulogne-Billancourt (FR)
(72) Inventor: BUCHALI, Fred, 70435 Stuttgart (DE); GEBHARD, Ulrich, 70435 Stuttgart (DE)
(74) Representative: Wetzel, Emmanuelle

(57) **Abstract**

The present document relates to a reconfigurable optical add/drop multiplexer comprising:
- an add portion (400a) being configured to add an optical channel to a wavelength division multiplex (WDM) transmission link, the add portion (400a) including a first wavelength-selective switch (420) for combining multiple optical WDM channels and a second wavelength-selective switch (430) coupled with the first wavelength-selective switch (420) for distributing one or more optical WDM channels to one or more selected output ports (432) of the second wavelength-selective switch (430);
- a drop portion (400b) configured to selectively distribute an optical WDM channel included in a WDM transmission link to a certain receiving port (452);

wherein the second wavelength-selective switch (430) of the add portion (400a) is configured to split the optical signal of an optical WDM channel and provide the splitted optical signal portions to different output ports (432) of the second wavelength-selective switch (430) in order to implement lightpath protection.

## Description

The present document relates to optical data transmission systems. In particular, the present document relates to a reconfigurable add-drop-multiplexer being adapted to provide 1+1 path protection in an optical transmission network.

Protection of lightpaths for high-availability services is essential in optical Wavelength Division Multiplexing (WDM) networks and requires the allocation of expensive resources in terms of both hardware and spectrum. At the same time, these networks are not static over time but undergo an evolution. To achieve efficient operation and avoid inefficient usage and stranded spectrum cumulated over time, lightpaths must be flexibly arranged and rearranged to follow changes of client demands and network topology. Thereby, ease of operation is a key feature. Today, high-availability services are protected by splitting the client signal at the sender node (e.g. using a Y-cable or an optical splitter) and transmitting it via two independent paths to the receiver node. The receiver monitors both paths via a performance monitor (e.g. OSNR meter, wavelength tracker etc.) and selects the better one in order to forward it to a client port. In prior art implementations, the hardware requirements (e.g. number of wavelength-selective switches WSS) necessary for offering protected services are high because e.g. only one instance of a certain wavelength can exist on a common port of a WSS, which leads to a duplication of the required WSSs.

It is an objective of the present disclosure to point out a method and an apparatus which provides reconfigurable and resource efficient 1+1 path protection in an optical transmission network.

According to a first aspect, a reconfigurable optical add/drop multiplexer (ROADM) is disclosed. The reconfigurable optical add/drop multiplexer comprises an add portion being adapted to include an optical client signal to the optical data to be transmitted and a drop portion, said drop portion being adapted to route a client signal included in the transmitted optical data to a receiving client entity.

The add portion of the ROADM is configured to add an optical channel received from a client entity to a wavelength division multiplex (WDM) transmission link. The add portion includes a first wavelength-selective switch (WSS) for combining multiple optical WDM channels, e.g. received from one or more client entities, and a second WSS coupled with the first WSS for distributing one or more optical WDM channels to one or more selected output ports of the second WSS. The output ports of the second WSS are coupled with transmission links of the optical network. The drop portion of the ROADM is configured to selectively distribute an optical WDM channel received from a WDM transmission link to a certain receiving port (e.g. coupled with a certain receiving client entity).The second WSS of the add portion is configured to split the optical signal of an optical WDM channel and provide the splitted optical signal portions to different output ports of the second WSS in order to implement lightpath protection. The output ports of the second WSS are coupled with a working path and a protection path of a protected lightpath.

This allows, in case that the client is optically connected with the ROADM, that the split functionality is transferred from an optical protection-switching assembly (OPSA) card typically placed in the optical signal path between client and ROADM to the WSS inside the ROADM. Thereby, the number of WSS included in the ROADM can be significantly reduced and no OPSA equipment is required in the optical signal path to/from the client. In other configurations, a client is electrically connected with the ROADM which comprises electro-optical conversion means, e.g. an optical terminal OT. In addition, for implementing 1+1 path protection, no hardware changes are necessary at the transmitting client or the ROADM, but only the WSSs have to be reconfigured (e.g. by a remote access to change settings of the respective WSSs).

According to embodiments, the drop portion comprises a first WSS for combining multiple optical WDM channels received from a transmission link and a second WSS coupled with the first WSS for selectively distributing one or more optical WDM channels to one or more output ports of the second WSS. The output ports of the second WSS are coupled with the receiving ports of the ROADM. The first WSS of the drop portion is coupled with a working path and a protection path of a protected lightpath. The first WSS is configured to select either the optical signal included in the working path or in the protection path and provide (only) the selected optical signal to the second WSS of the drop portion in order to provide the selected optical signal at a desired output port of the WSS. Thus, the select functionality is transferred from the receiving client (e.g. realized by the select functionality of an OPSA card) to the WSS included in the drop portion of the ROADM. Thereby, the number of WSSs included in the ROADM can be significantly reduced and no OPSA equipment is required at the receiving client any more. In addition, for implementing 1+1 path protection, no hardware configuration changes are necessary at the receiving client, but only the WSSs has to be reconfigured (e.g. by a remote access to change settings of the respective WSSs).

According to embodiments, the second WSS of the add portion comprises a power splitter function for splitting the optical signal of an optical WDM channel in two or more signal portions. Typically, the power splitter operates wavelength-selective and splits optical signals of one or more selected wavelengths. For example, the power splitter in the second WSS may be configurable by remote access via control signals that are supplied to the WSS. The power splitter may split the optical signal according to a desired splitting ratio, e.g. 50/50 power splitting, i.e. a first signal portion comprising a first half of the optical signal power is provided to a first output port of the second WSS and a second signal portion comprising the second half of the optical signal power is provided to a second output port of the second WSS. The output ports at which said signal portions are provided can be freely selected.

According to embodiments, the second wavelength-selective switch of the add portion comprises a power equalizer function for controlling the power of said splitted optical signals. For example, a signal portion of the splitted signal may be multiplexed with another optical signal to a common output port by using wavelength division multiplexing (i.e. said optical signals are arranged in different WDM channels according to a WDM grid). The power equalizer may be used to equalize the optical power of said multiplexed channels in order to reduce nonlinear effects (e.g. introduced by in-line optical amplifiers) and/or to make the signal power in the working path and the protection path of the protected lightpath similar or equal. In embodiments, the wavelength-selective switch may provide passive equalization by refracting a light beam such that it impinges with a predetermined strength on an output port of the switch, as controlled by a switch drive profile. Further equalization may be applied to signals before the wavelength-selective switch. Preferably, signal power control such as wavelength-selective attenuation or amplification may be applied before the signals are multiplexed, e.g. before the signals enter the first WSS of the add portion. After multiplexing, attenuation or amplification is only feasible for the entire wavelength band of the multiplexed signals.

According to embodiments, an optical amplifier for amplifying the splitted optical signal portions is provided in the ROADM. Thereby, a power loss due to power splitting can be remedied and/or power equalization of multiplexed signals can be obtained by amplifying one or more optical signals included in said multiplexed signals. For example, an optical amplifier may be provided on the client side of the ROADM, e.g. in an OT. In other embodiments, an optical amplifier is provided within the WSS.

According to embodiments, the first wavelength-selective switch of the drop portion is coupled with performance measurement entities also called optical channel monitors (OCMs). Said performance measurement entities may be coupled with the working path and the protection path and configured to select the optical signal included in the working path or protection path based on a signal quality measurement value provided by said performance measurement entities. For example, the performance measurement entities may comprise a power meter and/or an optical signal to noise ratio (OSNR) measurement entity. So, the signal quality measurement value may be indicative for the optical power or the OSNR of the optical signals received in the working and protection paths. Thereby, it is possible to select the outperforming received signal based on said signal quality measurement value ("outperforming" e.g. in the sense of higher optical power or higher signal to noise ratio). An example for an OCM is an optical channel analyzer measuring the entire spectrum and determining signal power at predetermined wavelengths. Further, out-of-band noise may be measured and OSNR calculated.

According to embodiments, one or more of said performance measurement entities comprise an optical filter adapted to the wavelength of the optical WDM channel transmitted via the working path or the protection path for deriving wavelength-selective measurements. Said optical filter may have a configurable pass band adjusted according to the wavelength of the protected WDM channel. The optical filter may be reconfigurable in order to change the pass band and swept through the entire optical band for measuring the individual optical WDM channels. In embodiments, the filter may be arranged in the OCM and e.g. be part of an optical channel analyzer. Thereby, optical signals included in other WDM channels or out-of-band optical noise is suppressed and therefore not considered in the generated measurement values.

According to embodiments, the first wavelength-selective switch of the drop portion is configured to terminate the non-selected optical signal transmitted via the working path or protection path. For example, the non-selected optical signal may be absorbed in order to avoid undesired back-reflecting. Said termination/absorption may be performed in the WSS at which the optical signals of the working and protection paths are received. For example, refraction of a light beam in a WSS from an input port to an output port is controlled by a switch drive profile which e.g. determines the spatial position of crystals in the light path. In case of MEM-based WSS, the positions of mirrors are controlled. Thus, a light beam may be terminated by controlling its refraction such that it does not impinge on any output port.

According to embodiments, the second wavelength-selective switch of the add portion and/or the first wavelength-selective switch of the drop portion are remotely configurable in order to realize path protection on demand. More in detail, the split functionality in the second WSS of the add portion and/or the select functionality of the first WSS of the drop portion can be activated/deactivated remotely and respective switch drive profiles selected in order to configure 1+1 path protection. These switch drive profiles for WSS may be transmitted with the control commands for reconfiguration to the ROADM, or may be stored locally in the ROADM and only selected by the received control commands. It is worth mentioning that the second WSS of the add portion may comprise multiple switching entities in order to provide protection switching at multiple pairs of output ports and the first WSS of the drop portion may comprise multiple selecting entities in order to provide selection capabilities at multiple pairs of input ports.

According to a further aspect, a method for providing path protection in an optical transmission network using a reconfigurable optical add/drop multiplexer is disclosed. The reconfigurable optical add/drop multiplexer comprises an add portion and a drop portion, the add portion adding an optical WDM channel to a WDM transmission link. The add portion comprises a first wavelength-selective switch for combining multiple optical WDM channels and a second wavelength-selective switch coupled with the first wavelength-selective switch for distributing one or more optical WDM channels to one or more selected output ports of the second wavelength-selective switch. The method comprises the steps of:
- receiving a path protection demand for protecting the transmission of an optical WDM channel between a reconfigurable optical add/drop multiplexer of a transmitting node and a corresponding receiving node;
- configuring the second wavelength-selective switch of the reconfigurable optical add/drop multiplexer at the transmitting node to split the optical signal associated with the optical WDM channel to be protected and provide the splitted optical signal portions to different output ports of the second wavelength-selective switch in order to transmit said splitted optical signal portions via different optical transmission paths to the receiving node.

According to embodiments, the second wavelength-selective switch of the add portion equalizes the power of outgoing optical signals. Said power equalization may be advantageous for equalizing the optical power of multiple WDM channels, for example, in order to reduce nonlinear effects (e.g. introduced by in-line optical amplifiers).

According to embodiments, the corresponding receiving node comprises a reconfigurable optical add/drop multiplexer comprising an add portion and a drop portion, the drop portion comprising a first wavelength-selective switch for combining multiple received optical WDM channels and a second wavelength-selective switch coupled with the first wavelength-selective switch for selectively distributing one or more optical WDM channels to one or more receiving ports of the second wavelength-selective switch, wherein the first wavelength-selective switch of the drop portion is coupled with a working path and a protection path of a protected lightpath and the first wavelength-selective switch selects the optical signal included in the working path or the protection path and provides the selected optical signal to the second wavelength-selective switch.

According to embodiments, the first wavelength-selective switch of the drop portion is coupled with performance measurement entities included in the working path and the protection path and the method comprises selecting the optical signal included in the working path or protection path based on a measurement value provided by said performance measurement entities so that the optical signal with the higher optical power and/or the optical signal with the higher optical signal to noise ratio (OSNR) is selected. In other words, the selection is based on measurement values derived from the optical signals included in the working path and protection path by comparing said measurement values.

According to embodiments, the performance measurement entities wavelength-selectively measure the optical power and/or the optical signal to noise ratio (OSNR) of the optical signals included in the working path and the protection path. The optical signal included in the working path or protection path may be selected based on the measured optical power and/or OSNR.

According to embodiments, the method further comprises controlling the power of the splitted optical signal portions at the output ports of the second wavelength-selective switch of the add portion at the transmitting node so that the signal power in the working path and the protection path of the protected lightpath are similar or equal. Signal powers in the working path and the protection path may not necessarily be equal, e.g. if the path lengths are different and different transmission power is necessary in each path. Alternatively, the signal powers in the working path and the protection path may be individually power-balanced with neighboring channels in the respective path.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein
- Fig. 1: schematically illustrates an example diagram of an optical data transmission system implementing path protection by means of OPSA cards;
- Fig. 2: schematically illustrates the example architecture of a 3-degree reconfigurable optical add-drop multiplexer (ROADM);
- Fig. 3: schematically illustrates an example architecture of an add/drop block of a ROADM supporting 1+1 protection using at least eight WSS;
- Fig. 4: schematically illustrates an example architecture of an add/drop block of a ROADM supporting 1+1 protection using WSSs with split, respectively, select functionality; and
- Fig. 5: schematically illustrates an optical transmission network realizing 1+1 path protection on an intermediate transmission section.

In the following, embodiments of a method for providing path protection in an optical transmission network and a reconfigurable add-drop-multiplexer providing path protection in the optical transmission network are disclosed in closer detail.

In general, it is proposed to make use of the capabilities of Wavelength-Selective Switches (WSSs) to reduce the number of components and footprint for providing path protection in an optical transmission network. It is suggested to allocate the split and select functions necessary for 1+1 protection to the WSS in a Reconfigurable Optical Add/Drop Multiplexer (ROADM). Thereby, hardware components in the Add/Drop block of the ROADM are reduced. In detail, 4 WSSs per node, two for the add path and two for the drop path, can be saved. Additionally, an OPSA card for each client service which uses 1+1 protection is spared. The OPSA card is spared at both sender and receiver node.

By applying appropriate control signals, WSSs can be configured to split an optical client signal to two different output ports, such that the split signals can be routed via two different paths. As a WSS allows controlling the attenuation of each wavelength individually, including the split signal, optical power equalization can be achieved for outgoing multiplexed signals. The transmit WSS splits the received signal to two outgoing ports which are connected to different outgoing directions. In the opposite direction, two split signals enter a WSS in the receive block via two different input ports. Using monitoring facilities at their input ports (e.g. OSNR meter, OM or wavelength tracker), the WSS can continuously measure the OSNR or the power level of the optical working and protection signals and routes the better one to the client port while suppressing the other.

Thus, a WDM node architecture supporting protection of optical services in a cost-optimized way is described. In contrast to existing architectures that require extra hardware for splitting and selecting the protected service, and separate WSS capacity for the two redundant copies of the service, the proposed WDM node architecture combines the split/selection and the usual WSS function in the same WSS, thus reducing the amount of WSS per node. This results in a considerable cost reduction of the WDM node.

Further, the proposed architecture allows dynamically deciding for each client service if it is protected or not, as no specific hardware to implement the protection needs to be deployed. This adds an operational benefit to the service provider, as the deployed nodes are more flexible with regard to use of protection, and the node configuration does not have to be touched to implement protection (less truck rolls).

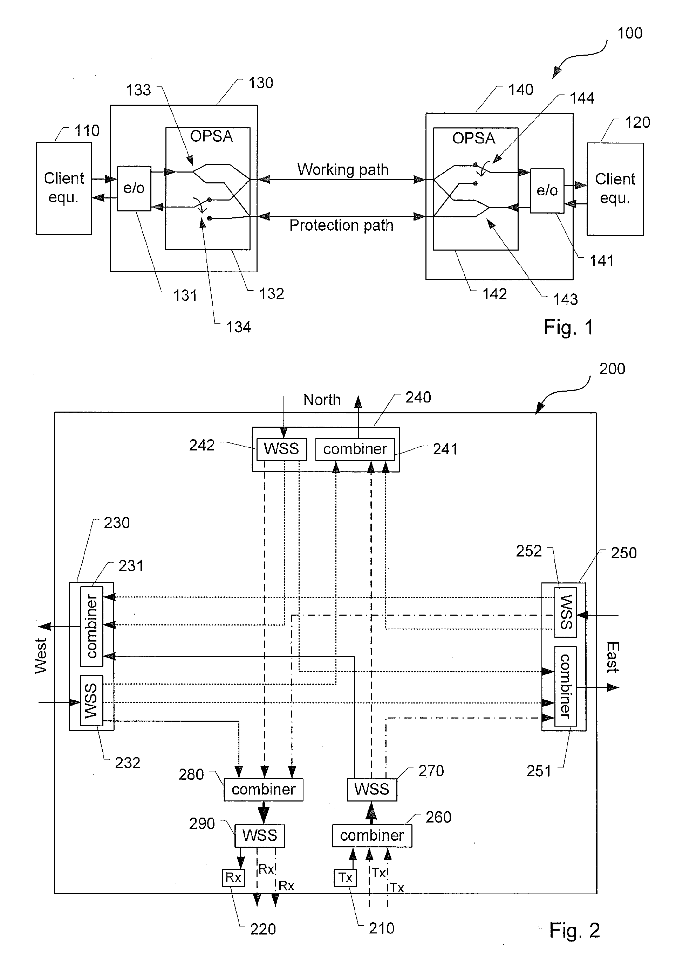

Fig. 1 schematically illustrates a basic protection scenario 100 between a first client equipment 110 and a second client equipment 120. The first client equipment 110 may provide first data to be transmitted to the second client equipment 120 by means of optical data transmission. The first client equipment 110 provides data in the electrical domain to an optical network element 130. In other words, the client equipment 110 may be coupled with an optical network element 130. The optical network element 130 comprises an electro-optical converter 131 and an optical protection switching module or optical protection switching entity (OPSA) 132. The electro-optical converter 131 converts the received electrical data into the optical domain and provides said data to the OPSA 132. The electro-optical converter 131 handles a transmit and receive path, i.e. in the transmitting path, the electro-optical converter 131 converts data from the electric domain into the optical domain and vice versa, for receiving, the electro-optical converter 131 converts data from the optical domain into the electric domain. According to other embodiments, separate electro-optical converters 131 may be provided in transmit and receive paths.

The OPSA 132 also includes transmit and receive paths or separate OPSAs 132 may be provided in said transmit and receive paths. In order to achieve optical protection of the transmitted data, the OPSA 132 comprises a splitter 133. The splitter 133 is configured to split the optical signal into a pair of signal portions. For example, each signal portion may comprise half signal power of the optical signal received at the input of the splitter (50:50 splitter). A first signal portion is provided to a working path and a second signal portion to a protection path, said working and protection paths coupling the first client equipment 110 with said second client equipment 120. For example, the working path and the protection path may be constituted by separate optical fibers arranged between the first and second client equipments 110, 120. So, by means of the OPSA 132, optical signals including identical data are provided to the working and protection paths in order to obtain 1+1 protection. For example, the optical signal may be transmitted in an optical wavelength division multiplex (WDM) channel according to a WDM grid and the same optical WDM channel may be used in the working path and the protection path.

In the receiving direction, the OPSA 132 comprises means for selecting an optical signal received from the working path or the protection path. More in detail, the OPSA 132 comprises a switch 134 coupling the output of the receiving path of the OPSA 132 either with the working path or the protection path in order to provide the optical signal received from one of said paths to the opto-electrical converter 131.

The second client equipment 120 is also coupled with an optical network element 140 including an electro-optical converter 141 and an OPSA 142. The receiving part of the OPSA 142 is coupled via the working path and the protection path with the transmitting path of the OPSA 132 and the transmitting path of the OPSA 142 is coupled with the receiving path of the OPSA 132. The OPSA 142 may comprise a similar structure as the OPSA 132 described before, i.e. the transmitting path comprises an optical splitter 143 in order to be able to provide identical (at least in the sense of data included) optical signals to the working path and protection path. In the receiving path, the OPSA 142 comprises an optical switching element 144 for selecting the optical signal received from the working path or the protection path.

The electro-optical converter 141 receives the selected optical signal from the OPSA 142 in order to transform said optical signal into the electrical domain and provide said electrical signal to the second client equipment 120. In the transmit direction, the electro-optical converter 141 receives an electrical signal from the second client equipment 120 and converts said electrical signal into the optical domain in order to provide said optical signal to the OPSA 142 for further transmission. In addition, OPSAs 132, 142 may be configured to attenuate each split signal in order to provide an optical signal with a desired optical power to the working path or protection path. For example, said optical attenuation may be advantageous in order to obtain WDM-multiplexed optical signals having identical or essentially identical optical power in the working and protection paths. Alternatively, the powers may be individually adapted to power equalization requirements of their respective paths. In addition, the client equipment 110, 120 are only aware of a single connection for transmit and receive data to the optical network. The network however has to provide two independent optical connections (1+1 path protection) along the path through the optical network not only in terms of spectrum but also in terms of hardware resources in the add/drop blocks which are coupled with the respective client equipment 110, 120.

Fig. 2 shows a 3-degree reconfigurable optical add-drop multiplexer (ROADM) 200 architecture. Said ROADM 200 comprises an input/output interface comprising multiple ports to be coupled with transmitting client entities 210 and receiving client entities 220. The ROADM 200 may comprise multiple network connection entities 230, 240, 250 which are configured to couple the ROADM 200 with different optical fiber links of the optical network. For example, the network coupling entity 230 may form a West interface coupling the ROADM 200 with a first optical fiber link, the network coupling entity 240 may form a North interface coupling the ROADM 200 with a second optical fiber link and the network coupling entity 250 may form an East interface coupling the ROADM 200 with a third optical fiber link.

Following the input/output interface, an optical combiner 260 combines multiple WDM channels (Tx(1), ..., Tx(k)) provided by transmitting client entities 210. Said optical combiner 260 may be coupled with a wavelength-selective switch 270 which provides routing of said WDM channels to certain network connection entities 230, 240, 250 in order to transmit the respective WDM channels via the desired optical fiber links. The wavelength-selective switch 270 is be coupled with optical combiners 231, 241, 251 which multiplex multiple WDM channels to an optical WDM signal to be transmitted over the optical fiber links.

In addition, each network connection entity 230, 240, 250 comprises a WSS 232, 242, 252. Said WSS 232, 242, 252 may be configured to demultiplex the WDM channels to different output ports of said WSS 232, 242, 252. The output ports are coupled with combiners included in the other network connection entities 230, 240, 250 or a combiner 280 which merges WDM channels of different WSS 232, 242, 252 for providing said WDM channels to receiving client entities 220.

Said combiner 280 may be, for example a passive optical component which couples optical signals received at different input ports to a single output port. The combiner 280 is coupled with a WSS 290 configured to selectively distribute the WDM channels received from said combiner 280 to output ports coupled with respective receiving client entities 220. So, in other words, by means of said WSS 290, it is possible to provide a certain WDM channel to a desired receiving client entity 220.

It is worth mentioning, that the WSS included in the ROADM 200 may be freely configurable by means of software to switch any of the WDM channels received at the common input port to any of the output ports. Thereby, a flexible routing of WDM channels is obtained. Similarly, in the receive direction, the WSS 232, 242, 252 may select which transit wavelengths are forwarded to one of the further network connection entities 230, 240, 250 (transit traffic) and which wavelengths are dropped to the WSS 290 which distributes the dropped WDM channels to be respective receiving client ports (e.g. the receiving client entity 220).

Disadvantageously, realizing a 1+1 protection cannot be supported by such ROADM 200 because a single wavelength can only exist once on a common port of a WSS.

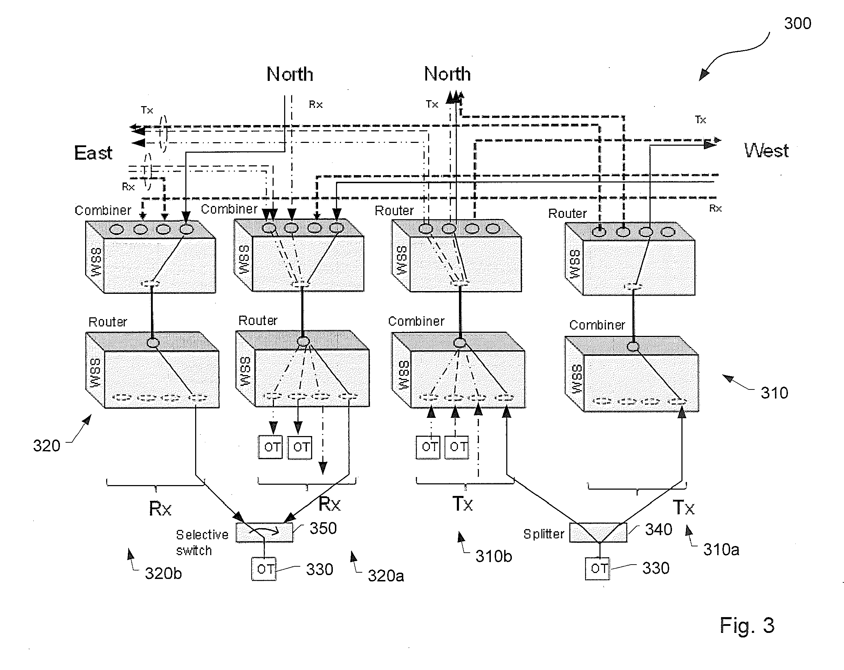

Fig. 3 shows an add/drop block 300 of the software-reconfigurable ROADM 200 configured to support 1+1 protection such as shown in Fig. 2. WSSs are bidirectional in the sense that they can function as both combiner (i.e. forwarding one or more WDM channels from an input port to the common port) and as router (i.e. wavelength-selectively forwarding one or more WDM channels from the common port to predefined output ports). Therefore, in Fig. 3 combiner functions as well as WDM channel dependent demultiplexing functions are performed by WSSs. In order to be able to support 1+1 protection, two additional WSSs are needed in the add block and two additional WSSs are included in the drop block. The two router WSSs in the add block have a connection each to North, East, and West ports, which can carry one or more WDM channels. Similarly, in the receive direction, North, East, and West ports are connected to the two WSSs included in the receive block. The solid-lined client signal is split and both signals are carried across independent WSS components to the desired outgoing direction.

More in detail, for realizing 1+1 protection, the add block 310 as well as the drop block 320 includes duplicated add paths 310a, 310b and drop paths 320a, 320b. Thereby, it is possible to route the working path and the protection path through different add paths 310a, 310b, respectively, drop paths 320a, 320b in order to obtain 1+1 protection through the add/drop block. For example, the optical terminal 330 (e.g. comprising equipment interfacing with the client/serving the client) may be connected to a splitter 340 (e.g. included in an OPSA card) for providing two signal portions of the optical signal received from the transmitting optical terminal 330. The signal portions are provided through different add paths 310a, 310b, i.e. a first signal portion through the first add path 310a and a second signal portion through the second add path 310b. Thereby, a transmission of said signal portions (having same wavelength) via a common fiber can be avoided. Similarly, also the drop block 320 comprises at least two drop paths 320a, 320b wherein a first signal portion associated with a protected WDM channel is routed through a first drop path 320a and a second signal portion associated with said protected WDM channel is routed through the second drop path 320b. By means of an optical switch 350 (e.g. included in an OPSA card) one signal portion can be selected which is forwarded to the receiving optical terminal 330.

As shown, the ROADM architecture for realizing 1+1 protection needs many WSS components (four in the add block 310 and four in the drop block 320). WSSs are expensive, need shelf space and power; hence this architecture has a large footprint and is very costly.

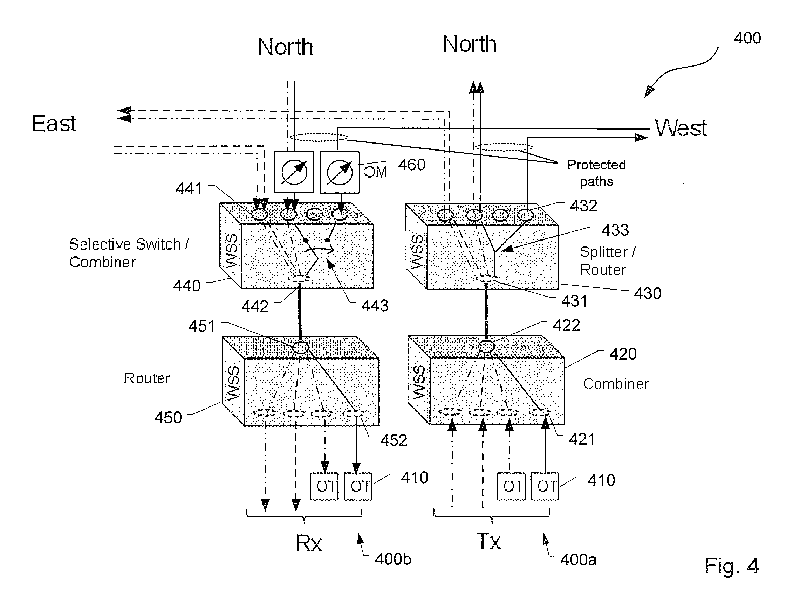

Fig. 4 illustrates an example embodiment of an add/drop architecture 400 for a ROADM which uses significantly reduced WSS resources for providing 1+1 protection. 1+1 protection according to the present invention means that optical data is transmitted simultaneously via distinct optical transmission paths. For example, the same WDM channels may be used in the working and protection paths for transmitting said data. So, portions of the optical client signal obtained by an optical splitter can be used as working path and protection path signals. The add/drop block architecture 400 may be used in a ROADM 200 such as shown in Fig. 2 to provide 1+1 protection.

The add/drop block architecture 400 comprises an add/drop portion 400a, 400b for adding/dropping WDM channels from/to optical terminals 410. The optical terminals 410 may be tunable to operate on a configurable wavelength. The add portion 400a comprises a first WSS 420 for combining multiple WDM channels to be added by the add/drop block architecture 400 and received at input ports 421 to a common output port 422. Said common output port 422 may be coupled with an input port 431 of a second WSS 430 also included in the add portion 400a. Said second WSS 430 may be configured to route WDM channels received at the input port 431 to pre-defined output ports 432 of the WSS 430 according to their wavelength. For example, a first set of WDM channels may be routed to an output port which is coupled with the East port of the ROADM comprising the add/drop block 400 whereas another set of WDM channels may be routed to an output coupled with the North port.

In order to obtain 1+1 protection, the WSS 430 comprises one or more splitting entities 433 in order to split the optical signal associated with a certain WDM channel and provide the signal portions obtained by said splitting to different output ports 432. Thereby, it is possible to route a first signal portion, for example, via the North port and a second signal portion, for example, via the West port in order to use different optical fiber links for said signal portions to be transmitted (i.e. different fibers for working and protection path). The WSS 430 may comprise attenuation means in order to attenuate signal portions. For example, said attenuating may be used for equalizing the optical power of outgoing signals, specifically of outgoing signals transmitted via the same output port 432. In addition or alternatively, optical amplifiers may be provided in the add/drop block. So, when compared with the add/drop architecture according to Fig. 3, the split functionality has moved from the OPSA equipment arranged close to the optical terminal OT connected to the client into the add portion 400a, specifically into the WSSs 430 close to the East, North and West ports. Compared to the embodiment of Fig. 3, the number of WSS in the add portion is halved and no OPSA equipment is needed at the optical terminal (i.e. at the client side). In addition, the path protection can be applied by a mere WSS configuration without the need to include any further equipment (OPSA equipment) at the client side.

Within the drop portion 400b, also a pair of WSSs is included wherein a first WSS 440 comprising multiple input ports 441 and a single output port 442 is configured to combine WDM channels received from the East, North and West ports of ROADM 200 at said input ports 441 and provide said WDM channels to said single output port 442, whereas the second WSS 450 (which is coupled with the first WSS 440) is configured to distribute the WDM channels received at a common input port 451 to output ports 452. A certain output port 452 which is coupled with an optical terminal 410 to which the respective WDM channel is directed to, may receive the respective WDM channel from the second WSS 450.

As shown in Fig. 4, optical signals (solid lines) of a 1+1 protected path are received at the WSS 440 of the drop portion 400b at different input ports 441 from the North and West ports. The WSS 440 comprises one or more optical switching functions (also called optical switches) 443 for selecting one optical signal of the 1+1 protected path in order to provide only the selected optical signal to the common output port 442, whereas the other optical signal of the1+1 protected path is terminated within the WSS 440. Compared to the embodiment of Fig. 3, the number of WSS in the drop portion is halved and no OPSA equipment is needed at the optical terminal (i.e. client side). In addition, the path protection can be applied by a mere WSS configuration without the need to include any further equipment (OPSA equipment) at the client side.

The selection of optical signal portions of the working path and protection path by means of the optical switching function 443 may be influenced by measurements of the optical signals included in the working and protection path before entering the WSS 440. According to other embodiments, said measurements may be derived within the WSS 440. Performance measurement entities 460 may provide quality measurement values of the optical signals included in the working and protection path. By comparing said quality measurement values, the outperforming optical signal can be detected which should be selected by the optical switching function 443 in order to be provided to the optical terminal 410. Said performance measurement entities 460 may be, for example, power meters or optical signal to noise ratio (OSNR) meters. So, the optical signal to be provided to the optical terminal 410 may be selected based on the optical power and/or the OSNR, i.e. the optical signal with the lowest OSNR and/or the greatest optical power may be selected.

The performance measurement entities 460 may be wavelength-selective measurement entities, i.e. the performance measurement entities 460 may only measure values in a certain wavelength region around the particular WDM channel mid wavelength in order to wavelength-selectively determine measurement values for making the selection decision. Thereby, only the optical power of the protected WDM channel is considered for making the selection. In addition, noise outside the protected WDM channel is filtered out.

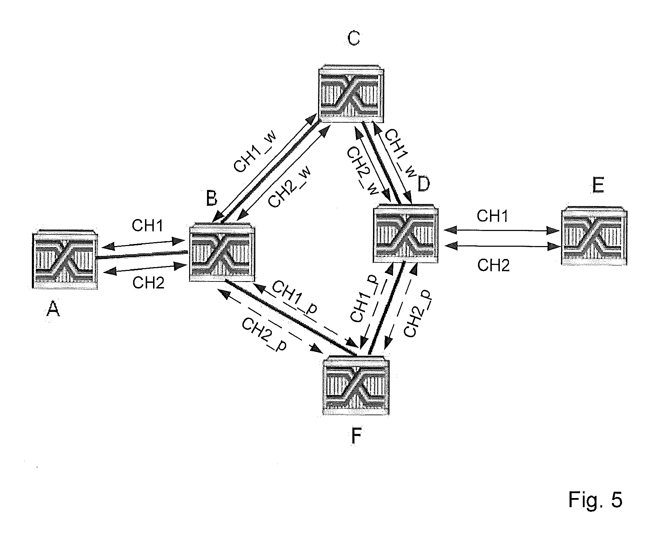

Fig. 5 shows an example optical data transmission network including network nodes A, B, C, D and E. For example, optical data included in optical WDM channels CH1 and CH2 should be transmitted from node A to node E. According to the present example, path protection is only provided on a certain transmission section of the whole transmission path, i.e. on the transmission section B-D (via B-C-D or B-F-D). This might be the case if no protection capabilities are available on the sections A-B and D-E or the transmission section B-D is highly prone to network failures. More in detail, the B-C-D route may form the working path for CH1 and CH2 (CH1_w, CH2_w) and the B-F-D route may form the protection path for CH1 and CH2 (CH1_p, CH2_p). So, nodes B and D may comprise one or more ROADMs described before based on Fig. 4 wherein (only considering one communication direction) a WSS included in the ROADM in node B may split the optical signals of CH1 and CH2 and a WSS included in the ROADM in node D may select the optical signal provided via the working path or the protection path and provide the selected signals to node E.

Summing up, a ROADM architecture with reduced number of WSS has been provided. In detail, a number of WSS can be saved in each node. In the above example, at least 4 WSS can be saved. In other examples with more channels (e.g. 80 WDM channels), the number of saved WSS can be even larger as typical WSS can switch today up to 20 channels and therefore the number of WSS in the system (which would be duplicated by the prior art approach) is much higher. The capabilities of enhanced wavelength-selective switches are employed to reduce the number of components and footprint:
1) A split and select function is implemented in the WSS. Thereby, hardware components in the add/drop block of the ROADM are reduced. More in detail, four WSSs per node are saved, two for the add path and two for the drop path.
2) Additionally, an OPSA card for each client service which uses 1+1 protection is spared, i.e. the OPSA card is spared at both transmitter and receiver node.

By applying appropriate control signals, WSSs can be dynamically configured to split an optical client signal to two different output ports, such that the split signals can be routed via two different paths. Further, WSS may allow controlling the attenuation of each wavelength individually including the split signal. Thereby, optical power equalization can be achieved for outgoing multiplexed signals. The transmit WSS splits the signal to be transmitted to two outgoing ports which are connected to different outgoing directions. In the receiving direction, two split signals enter a WSS in the drop block via two different input ports. Using monitoring facilities at the input ports (e.g. OSNR meter, optical power meter or wavelength tracker) the WSS can continuously measure the OSNR or the power level of the optical working and protection signals and routes the better one to the client port while suppressing the other.

Said ROADM architecture is advantageous because capital expenditure (CAPEX) and footprint of the ROADM is significantly reduced. In addition, when using the proposed ROADM architecture, an OPSA card for each client service using 1+1 protection can be spared, both in transmitter and receiver node. Thereby, further CAPEX and footprint is saved at the transmitter and receiver nodes. Furthermore, signal splitting can be performed by mere software command, i.e. the client connection does not need to be touched. This allows upgrading a client from standard restoration service to 1+1 protection without adding new hardware or touching the connection for inserting a coupler. Splitting can be done hitlessly. This means that the working path is not interrupted while part of its signal power is branched off for the protection path. In the same way, the protection path may be changed without impacting the working path. The present disclosure allows dynamically deciding for each client service if it is protected or not, as no specific hardware to implement the protection needs to be deployed. This adds an operational benefit to the service provider because the nodes are more flexible with respect to use of protection and the node hardware configuration does not have to be changed to implement protection (less truck rolls).

In addition, a potential rearrangement of the route of the protection path may be preferably performed in a hitless mode without interruption of the working path to avoid the interruption of traffic.

As shown in Fig. 5, the disclosed path protection system and methods can be used to realize partial or even multiple partial protection, i.e. signal splitting can occur in the middle of a path. This may be useful to secure a path using two different operators or to cross particularly unreliable network segments without the need for end-to-end protection. It could also be used if disjoint paths are not available end-to-end for a client service. In such a case, there is no need to reserve two wavelengths on those segments on which the path is shared because the paths share the same trunk. Split and selective switching function can be configured at those intermediate nodes in the path, which terminate the disjoint segments. Although such scenarios cannot provide full protection, they can significantly increase reliability.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Reconfigurable optical add/drop multiplexer comprising:
- an add portion (400a) being configured to add an optical channel to a wavelength division multiplex (WDM) transmission link, the add portion (400a) including a first wavelength-selective switch (420) for combining multiple received optical WDM channels and a second wavelength-selective switch (430) coupled with the first wavelength-selective switch (420) for routing one or more optical WDM channels to one or more selected output ports (432) of the second wavelength-selective switch (430);
- a drop portion (400b) configured to selectively route an optical WDM channel included in a WDM transmission link to a certain receiving port;
wherein the second wavelength-selective switch (430) of the add portion (400a) is configured to split the optical signal of an optical WDM channel and provide the splitted optical signal portions to different output ports (432) of the second wavelength-selective switch (430) in order to implement lightpath protection.

2. Reconfigurable optical add/drop multiplexer according to claim 1, wherein the drop portion (400b) comprises a first wavelength-selective switch (440) for combining multiple received optical WDM channels and a second wavelength-selective switch (450) coupled with the first wavelength-selective switch (440) for selectively routing one or more optical WDM channels to one or more output ports (452) of the second wavelength-selective switch (450), the first wavelength-selective switch (440) of the drop portion (400b) being coupled with a working path and a protection path of a protected lightpath, the first wavelength-selective switch (440) being configured to select the optical signal included in the working path or protection path and provide the selected optical signal to the second wavelength-selective switch (450).

3. Reconfigurable optical add/drop multiplexer according to claim 1 or 2, wherein the second wavelength-selective switch (430) of the add portion (400a) comprises a power splitter function (433) for splitting the optical signal of an optical WDM channel in two or more signal portions.

4. Reconfigurable optical add/drop multiplexer according to anyone of the preceding claims, wherein the second wavelength-selective switch (430) of the add portion (400a) comprises a power equalizer function for controlling the power of said splitted optical signals.

5. Reconfigurable optical add/drop multiplexer according to anyone of the preceding claims, comprising an optical amplifier for amplifying the splitted optical signal portions.

6. Reconfigurable optical add/drop multiplexer according to anyone of the preceding claims 2 to 5, wherein the first wavelength-selective switch of the drop portion (440) is coupled with performance measurement entities (460) coupled with the working path and the protection path and configured to select the optical signal included in the working path or protection path based on a signal quality measurement value provided by said performance measurement entities (460).

7. Reconfigurable optical add/drop multiplexer according to claim 6, wherein one or more of said performance measurement entities (460) is a power meter and/or an optical signal to noise ratio (OSNR) measurement entity.

8. Reconfigurable optical add/drop multiplexer according to claim 6 or 7, wherein one or more of said performance measurement entities (460) comprises an optical filter adapted to the wavelength of the optical WDM channel transmitted via the working path or the protection path for deriving wavelength-selective measurements.

9. Reconfigurable optical add/drop multiplexer according to anyone of the preceding claims 2 to 8, wherein the first wavelength-selective switch (440) of the drop portion (400b) is configured to terminate the non-selected optical signal transmitted via the working path or protection path.

10. Reconfigurable optical add/drop multiplexer according to anyone of the preceding claims, wherein the second wavelength-selective switch (430) of the add portion (400a) and/or the first wavelength-selective switch (440) of the drop portion (400b) are remote configurable in order to realize path protection on demand.

11. Method for providing path protection in an optical transmission network using a reconfigurable optical add/drop multiplexer comprising an add portion (400a) and a drop portion (400b), the add portion (400a) adding an optical WDM channel to a WDM transmission link and comprising a first wavelength-selective switch (420) for combining multiple optical WDM channels and a second wavelength-selective switch (430) coupled with the first wavelength-selective switch (420) for distributing one or more optical WDM channels to one or more selected output ports (432) of the second wavelength-selective switch (430), the method comprising the steps of:
- receiving a path protection demand for protecting the transmission of an optical WDM channel between a reconfigurable optical add/drop multiplexer of a transmitting node and a corresponding receiving node;
- configuring the second wavelength-selective switch (430) of the reconfigurable optical add/drop multiplexer at the transmitting node to split the optical signal associated with the optical WDM channel to be protected and provide the splitted optical signal portions to different output ports of the second wavelength-selective switch in order to transmit said splitted optical signal portions via different optical transmission paths to the receiving node.

12. Method according to claim 11, wherein the second wavelength-selective switch (430) equalizes the power of outgoing optical signals.

13. Method according to anyone of the claims 11 or 12, wherein the corresponding receiving node comprises a reconfigurable optical add/drop multiplexer comprising an add portion (400a) and a drop portion (400b), the drop portion (400b) comprising a first wavelength-selective switch (440) for combining multiple received optical WDM channels and a second wavelength-selective switch (450) coupled with the first wavelength-selective switch (440) for selectively distributing one or more optical WDM channels to one or more receiving ports (452) of the second wavelength-selective switch (450), wherein the first wavelength-selective switch (440) of the drop portion (400b) is coupled with a working path and a protection path of a protected lightpath and the method further comprises selecting, by the first wavelength-selective switch (440), the optical signal included in the working path or the protection path and providing the selected optical signal to the second wavelength-selective switch (450).

14. Method according to claim 13, wherein the first wavelength-selective switch (450) of the drop portion is coupled with performance measurement entities (460) included in the working path and the protection path and the method comprises selecting the optical signal included in the working path or protection path based on a signal quality measurement value provided by said performance measurement entities (460) so that the optical signal with the higher optical power and/or the optical signal with the higher optical signal to noise ratio (OSNR) is selected.

15. Method according to anyone of the claims 11 to 14,further comprising controlling the power of the splitted optical signal portions at the output ports of the second wavelength-selective switch (430) of the add portion (400a) at the transmitting node.
